(19) Europäisches Patentamt
European Patent Office
Office européen des brevets

(11) **EP 2 028 369 B1**

(12) **EUROPÄISCHE PATENTSCHRIFT**

(45) Veröffentlichungstag und Bekanntmachung des Hinweises auf die Patenterteilung:
**03.06.2015 Patentblatt 2015/23**

(51) Int Cl.:
***F03D 7/04*** *(2006.01)*

(21) Anmeldenummer: **08012746.7**

(22) Anmeldetag: **15.07.2008**

(54) **Verfahren und Vorrichtung zum Bestimmen einer Kennlinie für eine elektrische Größe einer Windenergieanlage**

Method and device for determining a characteristic curve for an electric variable of a wind turbine

Procédé et dispositif destinés à déterminer une courbe caractéristique pour une grandeur électrique d'une éolienne

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **02.08.2007 DE 102007036447**

(43) Veröffentlichungstag der Anmeldung:
**25.02.2009 Patentblatt 2009/09**

(73) Patentinhaber: **Nordex Energy GmbH
22419 Hamburg (DE)**

(72) Erfinder:
• **Jurkat, Mark
22844 Norderstedt (DE)**
• **Harms, Ulrich
22399 Hamburg (DE)**

(74) Vertreter: **Hauck Patentanwaltspartnerschaft mbB
Postfach 11 31 53
20431 Hamburg (DE)**

(56) Entgegenhaltungen:
**EP-A2- 1 873 396         WO-A1-2004/104412
DE-A1-102004 051 843     US-A1- 2004 230 377**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die vorliegende Erfindung betrifft ein Verfahren zum Bestimmen einer Kennlinie für eine elektrische Größe einer Windenergieanlage, wobei die Kennlinie Kennwerte der elektrischen Größe in Abhängigkeit von verschiedenen Werten des Windes enthält. Außerdem betrifft die Erfindung eine Vorrichtung zum Bestimmen einer Kennlinie für eine elektrische Größe einer Windenergieanlage, wobei die Kennlinie Kennwerte der elektrischen Größe in Abhängigkeit von verschiedenen Werten des Windes enthält.

Mit der zunehmenden Leistungsfähigkeit von Windenergieanlagen und deren Zusammenschluß zu Windparks besteht das Bedürfnis, die Einspeisung von elektrischer Leistung in das Stromnetz regeln bzw. steuern zu können. Dazu ist es bekannt, Windenergieanlagen und Windparks mit einer gedrosselten Leistung zu betreiben, wenn keine höhere Leistung in das Netz eingespeist werden kann oder soll. Bei einem gedrosselten Betrieb der Windenergieanlage besteht ein Bedürfnis, die vorhandene Regelungsreserve einer elektrischen Größe, wie beispielsweise der Wirkleistung der Windenergieanlage, bestimmen zu können. Daher werden für Windenergieanlagen beispielsweise vor dem Vertrieb der Anlage Kennlinien für elektrische Größen erstellt, wobei die Kennlinien Kennwerte der elektrischen Größe in Abhängigkeit von verschiedenen Werten des Windes, beispielsweise unterschiedlichen Windgeschwindigkeiten, enthalten. Derartige Kennlinien werden auch als vorbestimmte Kennlinien bezeichnet.

Solche Kennlinien können beispielsweise für eine Referenzwindenergieanlage des jeweiligen Anlagentyps berechnet oder bevorzugt experimentell ermittelt werden, indem zu der Referenzanlage bei verschiedenen Windgeschwindigkeiten Kennwerte der elektrischen Größe bestimmt werden. Ein Problem besteht dabei darin, daß sich abhängig von beispielsweise Produktionsschwankungen Unterschiede der Kennlinie einer individuellen Windenergieanlage zu der für die Referenzwindenergieanlage bestimmten Kennlinie ergeben können. So können sich für eine individuelle Windenergieanlage sowohl höhere als auch niedrigere Kennwerte für die elektrische Größe ergeben, als in der vorbestimmten Kennlinie angegeben.

Daher ist vorgeschlagen worden, für jede Windenergieanlage vor dem Vertrieb eine individuelle Kennlinie zu bestimmen. Allerdings hat sich herausgestellt, daß sich abhängig von beispielsweise geographischen oder anderen Betriebsbedingungen der Windenergieanlage am späteren Aufstellort wiederum andere Kennwerte der elektrischen Größe ergeben können, als für die individuell vorbestimmte Kennlinie ermittelt wurden. Die vorbestimmte Kennlinie ist daher nicht immer ausreichend zuverlässig.

Es ist weiterhin versucht worden, die vorbestimmte Kennlinie erst am Aufstellort der Windenergieanlage experimentell zu ermitteln. Ein Nachteil dieser Vorgehensweise besteht jedoch darin, daß die Kennlinie der Windenergieanlage erst nach einem verhältnismäßig langen Meßzeitraum zur Verfügung steht, nämlich wenn zu ausreichend vielen unterschiedlichen Windgeschwindigkeiten Kennwerte der elektrischen Größe gemessen werden konnten. Dadurch verzögert sich die vollumfängliche Inbetriebnahme der Anlage.

Aus der Druckschrift WO 2004/104412 A1 ist ein Verfahren zum Betreiben einer Windenergieanlage bekannt geworden, bei dem bei Abweichungen erfasster Parameterwerte von gespeicherten Parameterwerten abhängig von einer Randbedingung entweder die gespeicherten Parameterwerte an die erfassten Parameterwerte angepasst werden oder der Betrieb der Windenergieanlage abhängig von den erfassten Parameterwerten beeinflusst wird.

Aus der Druckschrift DE 10 2004 051 843 A1 ist eine Windenergieanlage und ein Verfahren zur automatischen Korrektur von Windfahnenfehleinstellungen bekannt geworden. Es erfolgt eine Korrektur der Azimutposition anhand von Leistungsdaten der Windenergieanlage. In diesem Zusammenhang ist ein selbstadaptierendes Effizienzmaßglied beschrieben.

Aus der Druckschrift US 2004/0230377 A1 ist ein SCADA-System (Supervisory Control and Data Acquisition) bekannt geworden.

Der vorliegenden Erfindung liegt daher die Aufgabe zugrunde, ein Verfahren und eine Vorrichtung der eingangs angegebenen Art bereitzustellen, mit denen eine zuverlässigere Kennlinie für eine elektrische Größe einer Windenergieanlage bestimmt werden kann, ohne daß es zu Verzögerungen bei der Inbetriebnahme der Windenergieanlage kommt.

Diese Aufgabe wird durch die Gegenstände der unabhängigen Ansprüche 1 und 9 gelöst. Vorteilhafte Ausgestaltungen finden sich in den abhängigen Ansprüchen sowie der Beschreibung und der Zeichnung.

Die Erfindung löst das Problem in Bezug auf das eingangs genannte Verfahren dadurch, daß mindestens ein Kennwert der elektrischen Größe für mindestens einen Wert des Windes gemessenen wird und für den mindestens einen Wert des Windes ein Kennwert der elektrischen Größe aus einer vorbestimmten, Kennwerte der elektrischen Größe in Abhängigkeit von verschiedenen Werten des Windes enthaltenden Kennlinie unter Berücksichtigung des für den mindestens einen Wert des Windes gemessenen Kennwerts adaptiert wird.

Für die eingangs genannte Vorrichtung löst die Erfindung das Problem dadurch, daß eine Messeinrichtung vorgesehen ist, mit der mindestens ein Kennwert der elektrischen Größe für mindestens einen Wert des Windes messbar ist und eine Auswerteeinrichtung, mit der für den mindestens einen Wert des Windes ein Kennwert der elektrischen Größe aus einer vorbestimmten, Kennwerte der elektrischen Größe in Abhängigkeit von verschiedenen Werten des Windes enthaltenden Kennlinie unter Berücksichtigung des für den mindestens einen Wert des Windes gemessenen Kennwerts adaptierbar ist.

Der Erfindung liegt also der Gedanke zugrunde, eine Kennlinie für eine elektrische Größe der Windenergieanlage, beispielsweise eine Leistungskennlinie, zu bestimmen, indem eine vorbestimmte Kennlinie durch ein Adaptieren der Kennwerte an tatsächlich herrschende Betriebsbedingungen angepasst wird. Die vorbestimmte Kennlinie kann dabei eine für eine Referenzwindenergieanlage bestimmte Kennlinie sein. Die vorbestimmte Kennlinie kann aber auch vor dem Vertrieb der Windenergieanlage individuell für die jeweilige Windenergieanlage ermittelt worden sein. Bei dem Kennwert der elektrischen Größe handelt es sich dabei um einen Wert der elektrischen Größe der sich zu einem bestimmten Wert des Windes bei einem ungedrosselten Betrieb der Windenergieanlage ergibt. Der Kennwert stellt also eine Information über den zu einem bestimmten Wert des Windes maximal erreichbaren Wert der elektrischen Größe zur Verfügung. Bei dem Kennwert kann es sich insbesondere um einen über ein Zeitintervall gemittelten Wert handeln, der im Betrieb auch kurzfristig über- oder unterschritten werden kann.

Im Betrieb der Anlage werden zu verschiedenen Werten des Windes oder zu demselben Wert des Windes ein oder mehrere Kennwerte der elektrischen Größe gemessen. Ein Wert des Windes kann insbesondere auch ein Abschnitt oder Intervall eines den Wind beschreibenden Parameters, wie beispielsweise ein bestimmter Windgeschwindigkeitsabschnitt, sein. Insbesondere kann die den Wert des Windes anzeigende Abszisse der Kennlinie in Abschnitte oder Intervalle aufgeteilt werden, die dann sukzessive mit gemessenen Kennwerten gefüllt werden können. Kennwerte zu einem bestimmten Wert des Windes umfassen im Sinne der Erfindung also insbesondere Kennwerte zu einem bestimmten solchen Intervall oder Abschnitt eines den Wind beschreibenden Parameters, wie beispielsweise einem Windgeschwindigkeitsabschnitt.

Das Messen der Kennwerte kann insbesondere am Aufstellort der Windenergieanlage erfolgen. Auf Grundlage der gemessenen Kennwerte kann die vorbestimmte Kennlinie sukzessive an die am Aufstellort tatsächlich herrschenden Bedingungen angepaßt werden, indem auf Grundlage der bereits gemessenen Werte ein adaptierter Kennwert bestimmt wird. Auch eine Anpassung an anlagenspezifische Besonderheiten erfolgt auf diese Weise. Je mehr Meßwerte mit der Zeit vorliegen, desto besser kann die vorbestimmte Kennlinie adaptiert werden. Dazu können in verschiedene Abschnitte des den Wind beschreibenden Parameters der gemessenen Kennlinie nacheinander die gemessenen Kennwerte für die elektrische Größe eingetragen werden und auf dieser Grundlage wird die Optimierung durchgeführt.

Erfindungsgemäß kann die Windenergieanlage am Aufstellort sofort vollumfänglich in Betrieb genommen werden, indem die Anlage bei Inbetriebnahme zunächst auf Grundlage der vorbestimmten Kennlinie betrieben wird. Es kann also, sofern zu einem Wert des Windes noch kein am Aufstellort gemessener Kennwert der elektrischen Größe vorliegt, als adaptierter Kennwert insbesondere der jeweilige Kennwert aus der vorbestimmten Kennlinie gewählt werden. Somit können sofort ab Inbetriebnahme Leistungsreserven der Anlage anhand zunächst der vorbestimmten Kennlinie ermittelt werden. Mit zunehmender Zahl von gemessenen Kennwerten kann die vorbestimmte Kennlinie dann immer vollständiger und besser an die tatsächlichen Betriebsbedingungen der Anlage angepaßt werden. Ausgehend von einer vorbestimmten Kennlinie findet also eine sukzessive Optimierung dieser Kennlinie statt.

Bei der experimentellen Ermittlung einer vorbestimmten Kennlinie wird üblicherweise eine Reihe von Kennwerten gemessen, die anschließend als Stützwerte der Kennlinie dienen. Zwischen diesen Stützwerten wird die vorbestimmte Kennlinie üblicherweise interpoliert. Im Rahmen der Erfindung umfassen die zu adaptierenden Kennwerte der vorbestimmten Kennlinie insbesondere auch solche Werte, die keine Stützwerte sind, sondern die aufgrund einer Interpolation bestimmt wurden.

Erfindungsgemäß kann insbesondere eine Mehrzahl von Kennwerten der elektrischen Größe gemessen werden bzw. mit der Meßeinrichtung meßbar sein. Dabei kann eine Mehrzahl von Kennwerten zu demselben Wert des Windes und/oder zu unterschiedlichen Werten des Windes gemessen werden. Mit steigender Anzahl von Messwerten insbesondere zu demselben Wert des Windes erhöht sich die Zuverlässigkeit des Meßergebnisses. Der Einfluß von Ausreißern auf die Messung wird mit zunehmender Anzahl von Messungen geringer.

Es kann auch vorgesehen sein, dass zwischen bereits adaptierten Kennwerten der Kennlinie, also Stützwerten der Kennlinie, interpoliert wird und die Kennlinie auf diese Weise vervollständigt wird.

Zur Messung des Windes können insbesondere ein oder mehrere Windmeßmasten vorgesehen sein, die einen Wert des Windes, beispielsweise die Windgeschwindigkeit, messen.

Die erfindungsgemäß ermittelte Kennlinie kann dann durch bestimmte Betriebszustände, wie zum Beispiel eine manuelle Leistungsreduzierung für die Einspeisung in ein Stromnetz, in gewünschter Weise begrenzt werden.

Gemäß einer bevorzugten Ausgestaltung der Erfindung, können der Kennwert der vorbestimmten Kennlinie und der mindestens eine gemessene Kennwert gewichtet in eine Berechung des adaptierten Kennwerts eingehen. In diesem Fall kann also die Aussagekraft der Messwerte durch eine entsprechende Gewichtung berücksichtigt werden. Gemäß einer besonders praxisgemäßen Ausgestaltung kann vorgesehen sein, daß der adaptierte Kennwert berechnet wird, indem aus dem Kennwert der elektrischen Größe aus der vorbestimmten Kennlinie und dem mindestens einen gemessenen Kennwert ein gewichteter Mittelwert berechnet wird.

Bei der Erfindung wird die Anzahl der zu einem Wert des Windes gemessenen Kennwerte der elektrischen Größe festgestellt und das Adaptieren des Kennwerts wird in Abhängigkeit von der Anzahl der zu dem jeweiligen Wert des Windes gemessenen Kennwerte durchgeführt. Dadurch ist es insbesondere möglich, aus der Anzahl von Messwerten zu demselben Wert des Windes auf die Aussagekraft der Messung zu schließen. So können beispielsweise unterhalb einer Grenzanzahl sowohl der vorbestimmte Kennwert als auch der oder die gemessenen Kennwerte in die Berechnung des adaptierten Kennwerts eingehen.

Insbesondere ist es möglich, eine gewichtete Berechnung des adaptierten Kennwerts, beispielsweise einen gewichteten Mittelwert aus dem Kennwert der vorbestimmten Kennlinie und dem gemessenen Kennwert, dann zu berechnen, wenn die Anzahl der zu dem jeweiligen Wert des Windes gemessenen Kennwert der elektrischen Größe unterhalb einer Grenzanzahl liegt. Es wird also eine Grenzanzahl von Messungen zu einem bestimmten Wert des Windes festgelegt, unterhalb der sowohl die gemessenen Werte als auch der jeweilige vorbestimmte Wert der Kennlinie entsprechend gewichtet in die Berechnung des adaptierten Werts eingehen.

Für die Grenzanzahl hat sich in der Praxis beispielsweise ein Wert von 80 oder 100 Meßwerten für einen Wert des Windes als geeignet erwiesen.

Gemäß einer weiteren Ausgestaltung der Erfindung kann der gemessene $\underline{1}$ Kennwert der elektrischen Größe mit dem Gewicht $\dfrac{1}{n_{Ges}}$ in eine Berechnung des adaptierten Kennwerts eingehen und der Kennwert der elektrischen Größe aus der vorbestimmten Kennlinie mit dem Gewicht $\dfrac{n_{Ges}-n}{n_{Ges}}$ in die Berechnung des adaptierten Kennwerts eingehen, wobei n die Anzahl der zu dem jeweiligen Wert des Windes gemessenen Kennwerte der elektrischen Größe ist, und nGes eine Anzahl ist, die größer als n ist, oder gleich n ist. Bei dieser Wahl der Gewichte hat der vorbestimmte Kennwert also einen umso geringeren Einfluß auf den adaptierten Kennwert, je mehr Messwerte zu dem Wert des Windes dieses Kennwerts vorliegen. Insbesondere wenn zu einem Wert des Windes noch keine Messung vorliegt, also n=0 ist, wird demnach nur der vorbestimmte Kennwert für die Adaptierung berücksichtigt, der vorbestimmte Kennwert wird also auch als adaptierter Kennwert bestimmt. Ist dagegen n gleich nGes oder größer, werden für die Adaptierung des Kennwerts nur die gemessenen Kennwerte berücksichtigt, Der vorbestimmte Kennwert geht dann nicht mehr in die Adaptierung ein, sein Gewicht ist Null.

Gemäß einer besonders bevorzugten Ausgestaltung kann die Anzahl nGes gleich der Grenzanzahl sein, unterhalb der sowohl die gemessenen Kennwerte als auch der vorbestimmte Kennwert, gegebenenfalls gewichtet, in die Berechnung des adaptierten Kennwerts eingehen.

Es kann vorgesehen sein, daß ab Erreichen einer Grenzanzahl von zu einem Wert des Windes gemessenen Kennwerten der elektrischen Größe der Kennwert der vorbestimmten Kennlinie zu diesem Wert des Windes adaptiert wird, indem der Mittelwert der gemessenen Kennwerte als adaptierter Kennwert zu diesem Wert des Windes bestimmt wird. Bei dieser Ausgestaltung geht also der vorbestimmte Kennwert nicht mehr in die Bestimmung des adaptierten Kennwerts ein, sofern die Grenzanzahl von Messungen überschritten ist. Die Grenzanzahl wird dabei so gewählt, daß eine ausreichende Aussagekraft der Messungen vorliegt. Insbesondere kann selbstverständlich dieselbe Grenzanzahl als Schwelle vorgesehen sein, unterhalb der sowohl die gemessenen Kennwerte als auch der vorbestimmte Kennwert in die Bestimmung des adaptierten Kennwerts eingehen, und oberhalb der nur noch die gemessenen Kennwerte in die Bestimmung des adaptierten Werts eingehen.

Bei der elektrischen Größe kann es sich um die elektrische Leistung der Windenergieanlage, insbesondere um die erzeugte Wirkleistung Pel der Windenergieanlage handeln. Es ist jedoch auch denkbar, daß es sich bei der elektrischen Größe alternativ oder zusätzlich beispielsweise um die erzeugte Blindleistung Q der Windenergieanlage und/oder den Phasenwinkel φ und/oder den Leistungsfaktor cos φ und/oder den Wirkstrom IP und/oder den Blindstrom IQ oder eine andere elektrische Größe handelt.

Bei dem Wert des Windes kann es sich insbesondere um die Windgeschwindigkeit und/oder einen Windgeschwindigkeitsabschnitt handeln. Zusätzlich oder alternativ können jedoch auch weitere Werte des Windes, beispielsweise die Windrichtung, der Luftdruck, die Luftfeuchtigkeit, etc. Berücksichtigung finden.

Die erfindungsgemäße Vorrichtung ist insbesondere dazu eingerichtet, das erfindungsgemäße Verfahren durchzuführen.

Nachfolgend wird die Erfindung anhand einer ein Ausführungsbeispiel darstellenden Zeichnung näher erläutert. Es zeigen schematisch:

Fig. 1      eine Windenergieanlage mit einer erfindungsgemäßen Vorrichtung,

Fig. 2      ein Diagramm zur Veranschaulichung der Adaptierung der vorbestimmten Kennlinie,

Fig. 3      einen vergrößerten Ausschnitt aus dem in Fig. 2 dargestellten Diagramm.

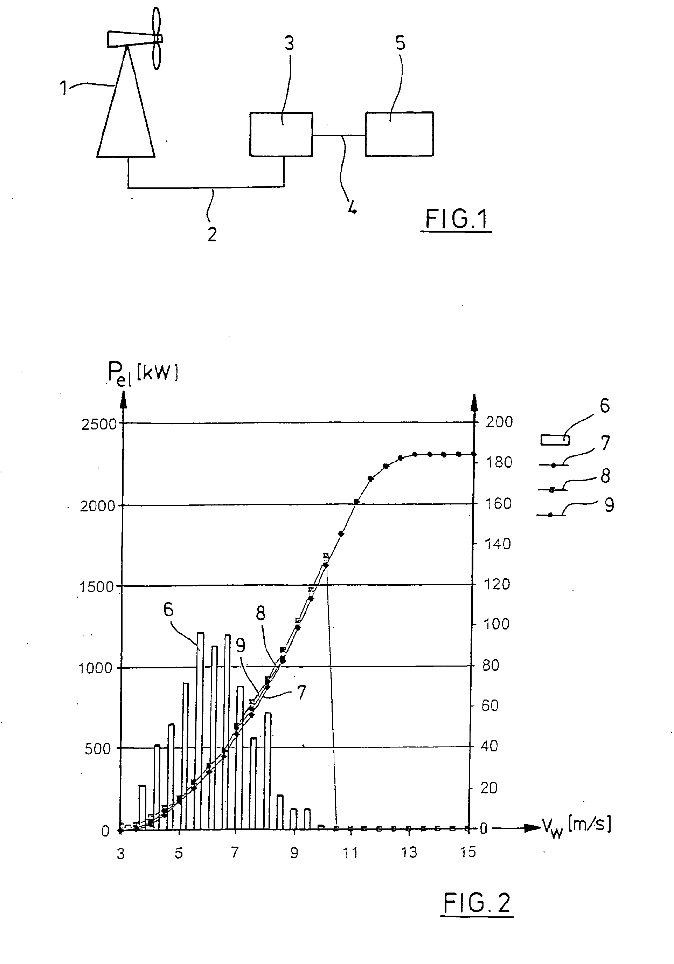

In Fig. 1 ist schematisch eine Windenergieanlage 1 dargestellt. Über eine geeignete Leitung 2 ist die Windenergieanlage 1 mit einer Meßeinrichtung 3 verbunden, mit der in dem dargestellten Beispiel ein Kennwert der von der Windenergieanlage 1 erzeugten Wirkleistung für verschiedene Windgeschwindigkeiten meßbar ist. Die Messeinrichtung 3 kann auch in die Windenergieanlage 1 integriert sein. Zur Messung der Windgeschwindigkeit sind nicht näher dargestellte Windmeßeinrichtungen vorgesehen. Über eine weitere Leitung 4 ist die Meßeinrichtung 3 mit einer Auswerteeinrichtung 5 verbunden, mit der für verschiedene Windgeschwindigkeiten Kennwerte der Wirkleistung aus einer vorbestimmten, Kennwerte der Wirkleistung in Abhängigkeit von verschiedenen Windgeschwindigkeiten enthaltenden Kennlinie unter Berücksichtigung der für die jeweiligen Windgeschwindigkeiten gemessenen Kennwerte adaptierbar sind. Auch die Auswerteeinrichtung 5 kann in die Windenergieanlage 1 integriert sein.

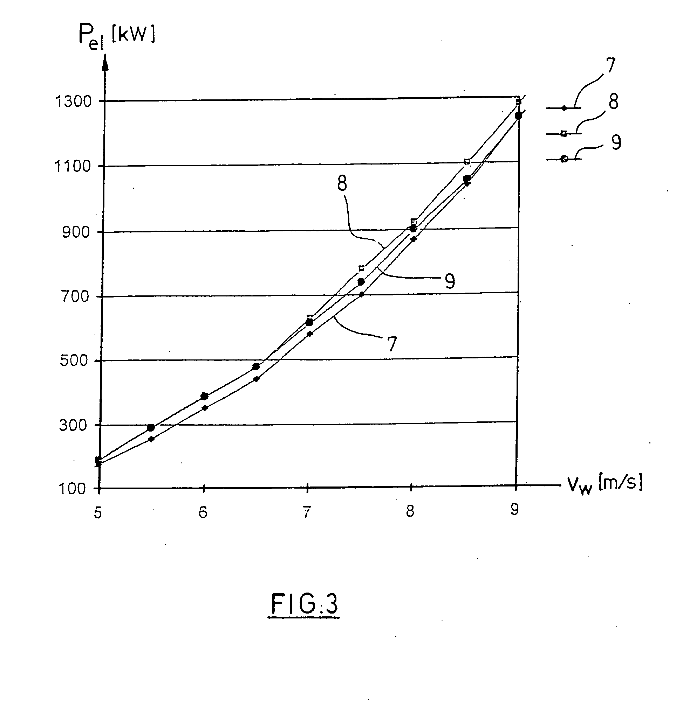

Die Funktionsweise der erfindungsgemäßen Vorrichtung wird anhand der in den Figuren 2 und 3 dargestellten Diagramme erläutert. In den Diagrammen ist jeweils auf der X-Achse die gemessene Windgeschwindigkeit vW in m/s angegeben. Auf der linken Y-Achse in den Diagrammen ist die erzeugte Wirkleistung Pel der Windenergieanlage 1 in Kilowatt aufgetragen.

In den Diagrammen ist eine vor dem Vertrieb und der Aufstellung der Anlage 1 für die Anlage 1 individuell ermittelte vorbestimmte Wirkleistungskennlinie 7 zu erkennen. Die experimentell ermittelten Stützwerte der vorbestimmten Kennlinie 7 geben zu der jeweiligen Windgeschwindigkeit vW den Kennwert der elektrischen Wirkleistung Pel an. Die Stützwerte der vorbestimmten Kennlinie 7 sind jeweils rautenförmig dargestellt. Zwischen den Stützwerten wurde die vorbestimmte Leistungskennlinie 7 interpoliert.

Zu verschiedenen Windgeschwindigkeiten vW wurden am Aufstellort der Anlage 1 jeweils Kennwerte der Wirkleistung $P_{el}$ gemessen. In dem dargestellten Beispiel wurde die die Windgeschwindigkeit zeigende Abszisse der Diagramme in Abschnitte von 0,5 m/s unterteilt. Gemessene Kennwerte zu in demselben Abschnitt liegenden Windgeschwindigkeiten wurden dabei als Kennwerte zu demselben Wert des Windes, nämlich dem jeweiligen Windenergieabschnitt, berücksichtigt. Die Stützwerte der gemessenen Kennwertekurve sind in den Diagrammen quadratisch dargestellt. Diese können aus den zu dem jeweiligen Windgeschwindigkeitsabschnitt gemessenen Kennwerten berechnet werden, beispielsweise durch eine Mittelwertbildung. Durch Interpolation zwischen den Stützwerten wurde eine Meßkurve 8 für die maximale Wirkleistung der Anlage 1 bei verschiedenen Windgeschwindigkeiten vW ermittelt.

In dem in Fig. 2 dargestellten Diagramm ist neben der auf der linken Y-Achse aufgetragenen Wirkleistung Pel auf einer zusätzlichen rechten Y-Achse die Anzahl n der zu den verschiedenen Windgeschwindigkeitsabschnitten gemessenen Kennwerte der Wirkleistung Pel aufgetragen. Die Anzahl n der Messungen zu dem jeweiligen Windgeschwindigkeitsabschnitt ist in dem Diagramm in Fig. 2 durch entsprechende Balken 6 dargestellt. Es ist zu erkennen, daß insbesondere bei häufig auftretenden Windgeschwindigkeiten zwischen 4 und 8 m/s schon verhältnismäßig viele Messwerte vorliegen.

Oberhalb einer Windgeschwindigkeit von 10 m/s liegen in dem dargestellten Beispiel noch keine Messwerte vor, wie durch die auf der X-Achse dargestellten Quadrate veranschaulicht.

Schließlich sind in den Diagrammen kreisförmig die adaptierten Kennwerte der Wirkleistung dargestellt. Im folgenden wird das Adaptieren der vorbestimmten Kennwerte erläutert. Das Ergebnis der Adaption ist am besten in der Vergrößerung in Fig. 3 zu erkennen.

In dem dargestellten Beispiel wurde mittels der Auswerteeinrichtung 5 unterhalb einer Grenzanzahl von 80 Messungen zu einem bestimmten Windgeschwindigkeitsabschnitt der vorbestimmte Kennwert adaptiert, indem aus dem Kennwert der Wirkleistung aus der vorbestimmten Leistungskennlinie und den gemessenen Kennwerten zu diesem Windgeschwindigkeitsabschnitt ein gewichteter Mittelwert berechnet wurde. Dabei wurde jeder gemessene Kennwert als Gewicht mit dem Reziproken der Grenzanzahl, also 1/80, versehen. Der Kennwert aus der vorbestimmten Kennlinie wurde mit dem Gewicht $\dfrac{80-n}{80}$ versehen, wobei n die Anzahl der zu dem jeweiligen Windgeschwindigkeitsabschnitt durchgeführten Messungen ist und 80 die Grenzanzahl.

Für solche Windgeschwindigkeiten bzw. Windgeschwindigkeitsabschnitt, zu denen noch kein gemessener Kennwert vorlag (also insbesondere Windgeschwindigkeiten größer als 10 m/s), wurde von der Auswerteeinrichtung als adaptierter Kennwert der Kennwert aus der vorbestimmten Kennlinie gewählt. Die Anlage 1 konnte also sofort ab Aufstellung am jeweiligen Betriebsort vollumfänglich in Betrieb genommen werden. Für solche Windgeschwindigkeiten bzw. Windgeschwindigkeitsabschnitte, zu denen 80 oder mehr gemessene Kennwerte vorlagen, wurde als adaptierter Kennwert der Mittelwert der gemessenen Kennwerte berechnet, ohne daß der Kennwert aus der vorbestimmten Kennlinie bei der Berechnung berücksichtigt wurde. In dem dargestellten Beispiel traf dies bei drei Windgeschwindigkeitsabschnitten zu, nämlich um 5,5 m/s, um 6 m/s und um 6,5 m/s.

Die auf diese Weise adaptierten Kennwerte bilden die kreisförmig dargestellten Stützwerte der adaptierten Kennlinie. Zwischen diesen Stützwerten wurde eine Interpolation durchgeführt, so daß die adaptierte Wirkleistungskennlinie 9 erhalten wurde. Auf Grundlage dieser adaptierten Wirkleistungskennlinie ist ein zuverlässiges Betreiben der Windenergieanlage 1, insbesondere ein zuverlässiges Ermitteln einer Regelungsreserve der Wirkleistung der Anlage 1 bei den am Aufstellort tatsächlich herrschenden Betriebsbedingungen möglich.

**Patentansprüche**

1. Verfahren zum Bestimmen einer Kennlinie (9) für ei-

ne elektrische Größe ($P_{el}$, Q, $\varphi$, cos $\varphi$, $I_P$, $I_Q$) einer Windenergieanlage (1), wobei die Kennlinie (9) Kennwerte der elektrischen Größe ($P_{el}$, Q, $\varphi$, cos $\varphi$, $I_P$, $I_Q$) in Abhängigkeit von verschiedenen Werten des Windes ($v_W$) enthält und das Verfahren die folgenden Schritte aufweist:

- mindestens ein Kennwert der elektrischen Größe ($P_{el}$, Q, $\varphi$, cos $\varphi$, $I_P$, $I_Q$) wird für mindestens einen Wert des Windes ($v_W$) gemessen,
- für den mindestens einen Wert des Windes ($v_W$) wird ein Kennwert der elektrischen Größe ($P_{el}$, Q, $\varphi$, cos $\varphi$, $I_P$, $I_Q$) aus einer vorbestimmten, Kennwerte der elektrischen Größe ($P_{e1}$, Q, $\varphi$, cos $\varphi$, $I_P$, $I_Q$) in Abhängigkeit von verschiedenen Werten des Windes ($v_W$) enthaltenden Kennlinie (7) unter Berücksichtigung des für den mindestens einen Wert des Windes ($v_W$) gemessenen Kennwerts adaptiert, **dadurch gekennzeichnet, dass**
- die Anzahl (n) der zu einem Wert des Windes ($v_W$) gemessenen Kennwerte der elektrischen Größe ($P_{el}$, Q, $\varphi$, cos $\varphi$, $I_P$, $I_Q$) festgestellt wird und das Adaptieren des Kennwerts in Abhängigkeit von der Anzahl (n) der zu dem jeweiligen Wert des Windes ($v_W$) gemessenen Kennwerte durchgeführt wird und
- der Kennwert der vorbestimmten Kennlinie (7) und der mindestens eine gemessene Kennwert gewichtet in eine Berechnung des adaptierten Kennwerts eingehen, sofern die Anzahl (n) der zu dem jeweiligen Wert des Windes ($v_W$) gemessenen Kennwerte der elektrischen Größe ($P_{el}$, Q, $\varphi$, cos $\varphi$, $I_P$, $I_Q$) unterhalb einer Grenzanzahl liegt.

2. Verfahren nach Anspruch 1, **dadurch gekennzeichnet, daß** der adaptierte Kennwert berechnet wird, indem aus dem Kennwert der elektrischen Größe ($P_{el}$, Q, $\varphi$, cos $\varphi$, $I_P$, $I_Q$) aus der vorbestimmten Kennlinie (7) und dem mindestens einen gemessenen Kennwert ein gewichteter Mittelwert berechnet wird, sofern die Anzahl (n) der zu dem jeweiligen Wert des Windes ($v_W$) gemessenen Kennwerte der elektrischen Größe ($P_{el}$, Q, $\varphi$, cos $\varphi$, $I_P$, $I_Q$) unterhalb der Grenzanzahl liegt.

3. Verfahren nach einem der Ansprüche 1 oder 2, **dadurch gekennzeichnet, daß** der gemessene Kennwert der elektrischen Größe ($P_{el}$, Q, $\varphi$, cos $\varphi$, $I_P$, $I_Q$) mit dem Gewicht

$$\frac{1}{n_{Ges}}$$

in eine Berechnung des adaptierten Kennwerts eingeht, und der Kennwert der elektrischen Größe ($P_{el}$, Q, $\varphi$, cos $\varphi$, $I_P$, $I_Q$) aus der vorbestimmten Kennlinie (7) mit dem Gewicht

$$\frac{n_{Ges} - n}{n_{Ges}}$$

in die Berechnung des adaptierten Kennwerts eingeht, wobei *n* die Anzahl der zu dem jeweiligen Wert des Windes ($v_W$) gemessenen Kennwerte der elektrischen Größe ($P_{el}$, Q, $\varphi$, cos $\varphi$, $I_P$, $I_Q$) ist, und $n_{Ges}$ eine Anzahl ist, für die gilt: $n_{Ges} \geq n.$

4. Verfahren nach Anspruch 3, **dadurch gekennzeichnet, daß** die Anzahl $n_{Ges}$ gleich der Grenzanzahl ist.

5. Verfahren nach einem der Ansprüche 1 bis 4, **dadurch gekennzeichnet, daß** ab Erreichen einer Grenzanzahl von zu einem Wert des Windes ($v_W$) gemessenen Kennwerten der elektrischen Größe ($P_{el}$, Q, $\varphi$, cos $\varphi$, $I_P$, $I_Q$) der Kennwert der vorbestimmten Kennlinie (7) zu diesem Wert des Windes ($v_W$) adaptiert wird, indem der Mittelwert der gemessenen Kennwerte als adaptierter Kennwert zu diesem Wert des Windes ($v_W$) bestimmt wird.

6. Verfahren nach einem der vorhergehenden Ansprüche, **dadurch gekennzeichnet, daß** es sich bei der elektrischen Größe um die erzeugte Wirkleistung ($P_{e1}$) der Windenergieanlage (1) und/oder die Blindleistung (Q) der Windenergieanlage (1) handelt.

7. Verfahren nach einem der vorhergehenden Ansprüche, **dadurch gekennzeichnet, daß** es sich bei der elektrischen Größe um den Phasenwinkel ($\varphi$) und/oder den Leistungsfaktor (cos $\varphi$) und/oder den Wirkstrom ($I_P$) und/oder den Blindstrom ($I_Q$) handelt.

8. Verfahren nach einem der vorhergehenden Ansprüche, **dadurch gekennzeichnet, daß** es sich bei dem Wert des Windes ($v_W$) um die Windgeschwindigkeit ($v_W$) und/oder einen Windgeschwindigkeitsabschnitt handelt.

9. Vorrichtung zum Bestimmen einer Kennlinie (9) für eine elektrische Größe ($P_{el}$, Q, $\varphi$, cos $\varphi$, $I_P$, $I_Q$) einer Windenergieanlage (1), wobei die Kennlinie (9) Kennwerte der elektrischen Größe ($P_{el}$, Q, $\varphi$, cos $\varphi$, $I_P$, $I_Q$) in Abhängigkeit von verschiedenen Werten des Windes ($v_W$) enthält und die Vorrichtung umfasst:

- eine Messeinrichtung (3), die zum Messen mindestens eines Kennwerts der elektrischen Größe ($P_{el}$, Q, $\varphi$, cos $\varphi$, $I_P$, $I_Q$) für mindestens einen Wert des Windes ($v_W$) ausgebildet ist,
- eine Auswerteeinrichtung (5), die zum Adaptieren eines dem mindestens einen Wert des Windes ($v_W$) zugeordneten Kennwerts der elek-

trischen Größe ($P_{el}$, Q, φ, cos φ, $I_P$, $I_Q$) aus einer vorbestimmten, Kennwerte der elektrischen Größe ($P_{el}$, Q, φ, cos φ, $I_P$, $I_Q$) in Abhängigkeit von verschiedenen Werten des Windes ($v_W$) enthaltenden Kennlinie (7) unter Berücksichtigung des für den mindestens einen Wert des Windes ($v_W$) gemessenen Kennwerts ausgebildet ist, **dadurch gekennzeichnet, dass**
- die Auswerteinrichtung (5) dazu ausgebildet ist, die Anzahl (n) der zu einem Wert des Windes ($v_W$) gemessenen Kennwerte der elektrischen Größe ($P_{el}$, Q, φ, cos φ, $I_P$, $I_Q$) festzustellen und den Kennwert in Abhängigkeit von der Anzahl (n) der zu dem jeweiligen Wert des Windes ($v_W$) gemessenen Kennwerte zu adaptieren, wobei
- der Kennwert der vorbestimmten Kennlinie (7) und der mindestens eine gemessene Kennwert gewichtet in eine Berechnung des adaptierten Kennwerts durch die Auswerteeinrichtung (5) eingehen, sofern die Anzahl (n) der zu dem jeweiligen Wert des Windes ($v_W$) gemessenen Kennwerte der elektrischen Größe ($P_{el}$, Q, φ, cos φ, $I_P$, $I_Q$) unterhalb einer Grenzanzahl liegt.

10. Vorrichtung nach Anspruch 9, **dadurch gekennzeichnet, daß** die Auswerteeinrichtung (5) dazu ausgebildet ist, den adaptiven Kennwert zu berechnen, indem sie aus dem Kennwert der elektrischen Größe ($P_{el}$, Q, φ, cos φ, $I_P$, $I_Q$) aus der vorbestimmten Kennlinie (7) und dem mindestens einen gemessenen Kennwert einen gewichteten Mittelwert berechnet, sofern die Anzahl (n) der zu dem jeweiligen Wert des Windes ($v_W$) gemessenen Kennwerte der elektrischen Größe ($P_{el}$, Q, φ, cos φ, $I_P$, $I_Q$) unterhalb der Grenzanzahl liegt.

11. Vorrichtung nach einem der Ansprüche 9 oder 10, **dadurch gekennzeichnet, daß** der gemessene Kennwert der elektrischen Größe ($P_{el}$, Q, φ, cos φ, $I_P$, $I_Q$) mit dem Gewicht

$$\frac{1}{n_{Ges}}$$

in eine Berechnung des adaptierten Kennwerts eingeht, und der Kennwert der elektrischen Größe ($P_{el}$, Q, φ, cos φ, $I_P$, $I_Q$) aus der vorbestimmten Kennlinie (7) mit dem Gewicht

$$\frac{n_{Ges} - n}{n_{Ges}}$$

in die Berechnung des adaptierten Kennwerts eingeht, wobei *n* die Anzahl der zu dem jeweiligen Wert des Windes ($v_W$) gemessenen Kennwerte der elektrischen Größe ($P_{el}$, Q, φ, cos φ, $I_P$, $I_Q$) ist, und $n_{Ges}$ eine Anzahl ist, für die gilt: $n_{Ges} \geq n$.

12. Vorrichtung nach Anspruch 11, **dadurch gekennzeichnet, daß** die Anzahl $n_{Ges}$ gleich der Grenzanzahl ist.

13. Vorrichtung nach einem der Ansprüche 9 bis 12, **dadurch gekennzeichnet, daß** die Auswerteeinrichtung (5) dazu ausgebildet ist, ab Erreichen einer Grenzanzahl von zu einem Wert des Windes ($v_W$) gemessenen Kennwerten der elektrischen Größe ($P_{el}$, Q, φ, cos φ, $I_P$, $I_Q$) den Kennwert der vorbestimmten Kennlinie (7) zu diesem Wert des Windes ($v_W$) zu adaptieren, indem der Mittelwert der gemessenen Kennwerte als adaptierter Kennwert zu diesem Wert des Windes ($v_W$) bestimmt wird.

14. Vorrichtung nach einem der Ansprüche 9 bis 13 **dadurch gekennzeichnet, daß** es sich bei der elektrischen Größe um die erzeugte Wirkleistung ($P_{e1}$) der Windenergieanlage (1) und/oder die Blindleistung (Q) der Windenergieanlage (1) handelt.

15. Vorrichtung nach einem der Ansprüche 9 bis 14, **dadurch gekennzeichnet, daß** es sich bei der elektrischen Größe um den Phasenwinkel (φ) und/oder den Leistungsfaktor (cos φ) und/oder den Wirkstrom ($I_P$) und/oder den Blindstrom ($I_Q$) handelt.

16. Vorrichtung nach einem der Ansprüche 9 bis 15, **dadurch gekennzeichnet, daß** es sich bei dem Wert des Windes ($v_W$) um die Windgeschwindigkeit ($v_W$) und/oder einen Windgeschwindigkeitsabschnitt handelt.

**Claims**

1. A method for determining a characteristic curve (9) for an electric variable ($P_{el}$, Q, (p, cos φ, $I_P$, $I_Q$) of a wind turbine (1), wherein the characteristic curve (9) contains characteristic values of the electric variable ($P_{el}$, Q, φ, cos φ, $I_P$, $I_Q$) depending on different values of the wind (vw), the method comprising the following steps:

   • at least one characteristic value of the electric variable ($P_{el}$, Q, φ, cos φ, $I_P$, $I_Q$) is measured for at least one value of the wind ($v_W$),
   • for the at least one value of the wind ($v_W$), a characteristic value of the electric variable ($P_{el}$, Q, φ, cos φ, $I_P$, $I_Q$) of a predetermined characteristic curve (7) which contains characteristic values of the electric variable ($P_{el}$, Q, (p, cos φ, $I_P$, $I_Q$) as a function of different values of the wind (vw) is adapted, taking into account the characteristic value measured for the at least one value of the wind ($v_W$), **characterised in that**:

 o the number (n) of the characteristic values of the electric variable ($P_{el}$, Q, $\varphi$, cos $\varphi$, $I_P$, $I_Q$) measured for one value of the wind ($v_W$) is determined and the adaptation of the characteristic value is performed depending on the number (n) of the measured characteristic values measured for the respective value of the wind (vw), and
 o the characteristic value of the predetermined characteristic curve (7) and the at least one measured characteristic value are weighted in a calculation of the adapted characteristic value, provided that the number (n) of the characteristic values of the electric variable ($P_{el}$, Q, $\varphi$, cos $\varphi$, $I_P$, $I_Q$) measured for the respective value of the wind ($v_W$) is below a limiting number.

2. A method according to claim 1, **characterised in that** the adapted characteristic value is calculated by calculating a weighted arithmetic mean of the characteristic value of the electric variable ($P_{el}$, Q, $\varphi$, cos $\varphi$, $I_P$, $I_Q$) from the predetermined characteristic curve (7) and the at least one measured characteristic value, provided that the number (n) of the characteristic values of the electric variable ($P_{el}$, Q, $\varphi$, cos $\varphi$, $I_P$, $I_Q$) measured for the respective value of the wind (vw) is below the limiting number.

3. A method according to claim 1 or 2, **characterised in that** the measured characteristic value of the electric variable ($P_{el}$, Q, $\varphi$, cos $\varphi$, $I_P$, $I_Q$) enters into the calculation of the adapted characteristic value with a weight of

$$\frac{1}{n_{Ges}},$$

and **in that** the characteristic value of the electric variable ($P_{el}$, Q, $\varphi$, cos $\varphi$, $I_P$, $I_Q$) from the predetermined characteristic curve (7) enters into the calculation of the adapted characteristic value with a weight of

$$\frac{n_{Ges} - n}{n_{Ges}},$$

wherein $n$ is the number of the characteristic values of the electric variable ($P_{el}$, Q, (p, cos $\varphi$, $I_P$, $I_Q$) measured for the respective value of the wind (vw), and

$n_{Ges}$ is a number satisfying the condition $n_{Ges} \geq n$.

4. A method according to claim 3, **characterised in that** the number $n_{Ges}$ is equal to the limiting number.

5. A method according to any one of the claims 1 to 4, **characterised in that** after reaching a limiting number of characteristic values of the electric variable ($P_{el}$, Q, $\varphi$, cos $\varphi$, $I_P$, $I_Q$) measured for one value of the wind (vw), the characteristic value of the predetermined characteristic curve (7) for said one value of the wind ($v_W$) is adapted by setting the arithmetic mean of the measured characteristic values as the adapted characteristic value for said one value of the wind ($v_W$).

6. A method according to any one of the preceding claims, **characterised in that** the electric variable is the generated active power ($P_{el}$) of the wind turbine (1) and/or the reactive power (Q) of the wind turbine (1).

7. A method according to any one of the preceding claims, **characterised in that** the electric variable is the phase angle ($\varphi$) and/or the power factor (cos $\varphi$) and/or the active current ($I_P$) and/or the reactive current ($I_Q$).

8. A method according to any one of the preceding claims, **characterised in that** the value of the wind ($v_W$) is the wind velocity ($v_W$) and/or a range of wind velocities.

9. An apparatus for determining a characteristic curve (9) for an electric variable ($P_{el}$, Q, $\varphi$, cos $\varphi$, $I_P$, $I_Q$) of a wind turbine (1), wherein the characteristic curve (9) contains characteristic values of the electric variable ($P_{el}$, Q, (p, cos $\varphi$, $I_P$, $I_Q$) depending on different values of the wind ($v_W$), the apparatus comprising:

 • a measuring device (3) arranged for measuring at least one characteristic value of the electric variable ($P_{el}$, Q, $\varphi$, cos $\varphi$, $I_P$, $I_Q$) for at least one value of the wind ($v_W$),
 • an analysing unit (5) arranged for adapting a characteristic value assigned to the at least one value of the wind (vw) of the electric variable ($P_{el}$, Q, (p, cos $\varphi$, $I_P$, $I_Q$) of a predetermined characteristic curve (7) containing characteristic values of the electric variable ($P_{el}$, Q, $\varphi$, cos $\varphi$, $I_P$, $I_Q$) as a function of different values of the wind ($v_W$), taking into account the characteristic value measured for the at least one value of the wind ($v_W$), **characterised in that**:

  o the analysing unit (5) is arranged to determine the number (n) of the characteristic values of the electric variable ($P_{el}$, Q, $\varphi$, cos

$\varphi$, $I_P$, $I_Q$) measured for one value of the wind (vw) and to adapt the characteristic value depending on the number (n) of the measured characteristic values measured for the respective value of the wind ($v_W$), wherein o the characteristic value of the predetermined characteristic curve (7) and the at least one measured characteristic value are weighted in a calculation of the adapted characteristic value by the analysing unit (5), provided that the number (n) of the characteristic values of the electric variable ($P_{el}$, Q, $\varphi$, cos $\varphi$, $I_P$, $I_Q$) measured for the respective value of the wind (vw) is below a limiting number.

10. An apparatus according to claim 9, **characterised in that** the analysing unit (5) is arranged to calculate the adapted characteristic value by calculating a weighted arithmetic mean of the characteristic value of the electric variable ($P_{el}$, Q, (p, cos $\varphi$, $I_P$, $I_Q$) from the predetermined characteristic curve (7) and the at least one measured characteristic value, provided that the number (n) of the characteristic values of the electric variable ($P_{el}$, Q, $\varphi$, cos $\varphi$, $I_P$, $I_Q$) measured for the respective value of the wind (vw) is below the limiting number.

11. An apparatus according to claim 9 or 10, **characterised in that** the measured characteristic value of the electric variable ($P_{el}$, Q, $\varphi$, cos $\varphi$, $I_P$, $I_Q$) enters into a calculation of the adapted characteristic value with a weight of

$$\frac{1}{n_{Ges}},$$

and **in that** the characteristic value of the electric variable ($P_{el}$, Q, $\varphi$, cos $\varphi$, $I_P$, $I_Q$) from the predetermined characteristic curve (7) enters into the calculation of the adapted characteristic value with a weight of

$$\frac{n_{Ges} - n}{n_{Ges}},$$

wherein $n$ is the number of the characteristic values of the electric variable ($P_{el}$, Q, (p, cos $\varphi$, $I_P$, $I_Q$) measured for the respective value of the wind ($v_W$), and $n_{Ges}$ is a number satisfying the condition $n_{Ges} \geq n$.

12. An apparatus according to claim 11, **characterised in that** the number $n_{Ges}$ is equal to the limiting number.

13. An apparatus according to any one of the claims 9 to 12, **characterised in that** the analysing unit (5) is arranged to, after reaching a limiting number of characteristic values of the electric variable ($P_{el}$, Q, $\varphi$, cos $\varphi$, $I_P$, $I_Q$) measured for one value of the wind ($v_W$), adapt the characteristic value of the predetermined characteristic curve (7) for said one value of the wind ($v_W$) by setting the arithmetic mean of the measured characteristic values as the adapted characteristic value for said one value of the wind ($v_W$).

14. An apparatus according to any one of the claims 9 to 13, **characterised in that** the electric variable is the generated active power ($P_{el}$) of the wind turbine (1) and/or the reactive power (Q) of the wind turbine (1).

15. An apparatus according to any one of the claims 9 to 14, **characterised in that** the electric variable is the phase angle ($\varphi$) and/or the power factor (cos $\varphi$) and/or the active current ($I_P$) and/or the reactive current ($I_Q$).

16. An apparatus according to any one of claims 9 to 15, **characterised in that** the value of the wind ($v_W$) is the wind velocity ($v_W$) and/or a range of wind velocities.

**Revendications**

1. Procédé pour la détermination d'une courbe caractéristique (9) pour une grandeur électrique ($P_{el}$, Q, $\varphi$, cos $\varphi$, $I_P$, $I_Q$) d'une éolienne (1), dans lequel la courbe caractéristique (9) contient des valeurs caractéristiques de la grandeur électrique ($P_{el}$, Q, $\varphi$, cos $\varphi$, $I_P$, $I_Q$) en fonction de différentes valeurs du vent ($v_W$), et le procédé présente les étapes suivantes :

   - au moins une valeur caractéristique de la grandeur électrique ($P_{el}$, Q, $\varphi$, cos $\varphi$, $I_P$, $I_Q$) est mesurée pour au moins une valeur de vent ($v_W$),
   - pour l'au moins une valeur de vent (vw), une valeur caractéristique de la grandeur électrique ($P_{el}$, Q, $\varphi$, cos $\varphi$, $I_P$, $I_Q$) est adaptée à partir d'une courbe caractéristique (7) prédéterminée contenant des valeurs caractéristiques prédéterminées de la grandeur électrique ($P_{el}$, Q, $\varphi$, cos $\varphi$, $I_P$, $I_Q$) en fonction de différentes valeurs du vent ($v_W$), en tenant compte de la valeur caractéristique mesurée pour l'au moins une valeur de vent ($v_W$), **caractérisé en ce que**
   - le nombre (n) des valeurs caractéristiques de la grandeur électrique ($P_{el}$, Q, $\varphi$, cos $\varphi$, $I_P$, $I_Q$) mesurées pour une valeur de vent ($v_W$) est constaté, et l'adaptation de la valeur caractéristique est effectuée en fonction du nombre (n) des valeurs caractéristiques mesurées pour la valeur de vent ($v_W$) correspondante, et

- la valeur caractéristique de la courbe caractéristique (7) prédéterminée et l'au moins une valeur caractéristique mesurée sont intégrées de façon pondérée dans un calcul de la valeur caractéristique adaptée, dans la mesure où le nombre (n) des valeurs caractéristiques de la grandeur électrique ($P_{el}$, Q, $\varphi$, cos $\varphi$, $I_P$, $I_Q$) mesurées pour la valeur de vent ($v_W$) correspondante est inférieur à un nombre limite.

2. Procédé selon la revendication 1, **caractérisé en ce que** la valeur caractéristique adaptée est calculée en calculant une valeur moyenne à partir de la valeur caractéristique de la grandeur électrique ($P_{el}$, Q, $\varphi$, cos $\varphi$, $I_P$, $I_Q$) issue de la courbe caractéristique (7) prédéterminée et de l'au moins une valeur caractéristique mesurée, dans la mesure où le nombre (n) des valeur caractéristique de la grandeur électrique ($P_{el}$, Q, $\varphi$, cos $\varphi$, $I_P$, $I_Q$) mesurées pour la valeur de vent (vw) correspondante est inférieur au nombre limite.

3. Procédé selon l'une des revendications 1 ou 2, **caractérisé en ce que** la valeur caractéristique mesurée de la grandeur électrique ($P_{el}$, Q, $\varphi$, cos $\varphi$, $I_P$, $I_Q$) avec le poids

$$\frac{1}{n_{Ges}}$$

est intégrée dans un calcul de la valeur caractéristique adaptée, et la valeur caractéristique de la grandeur électrique ($P_{el}$, Q, $\varphi$, cos $\varphi$, $I_P$, $I_Q$) issue de la courbe caractéristique (7) prédéterminée avec le poids

$$\frac{n_{Ges} - n}{n_{Ges}}$$

est intégrée dans le calcul de la valeur caractéristique adaptée, où $n$ représente le nombre des valeurs caractéristiques de la grandeur électrique ($P_{el}$, Q, $\varphi$, cos $\varphi$, $I_P$, $I_Q$) mesurées pour la valeur de vent (vw) correspondante, et $n_{Ges}$ représente un nombre auquel s'applique : $n_{Ges} \geq n$.

4. Procédé selon la revendication 3, **caractérisé en ce que** le nombre $n_{Ges}$ est égal au nombre limite.

5. Procédé selon l'une des revendications 1 à 4, **ca-**

**ractérisé en ce que** dès lors que des valeurs caractéristiques de la grandeur électrique ($P_{el}$, Q, $\varphi$, cos $\varphi$, $I_P$, $I_Q$) mesurées pour une valeur de vent (vw) atteignent un nombre limite, la valeur caractéristique de la courbe caractéristique (7) prédéterminée pour cette valeur de vent ($v_W$) est adaptée en déterminant la valeur moyenne des valeurs caractéristiques mesurées en tant que valeur caractéristique adaptée pour cette valeur de vent ($v_W$).

6. Procédé selon l'une des revendications précédentes, **caractérisé en ce que** la grandeur électrique est la puissance active produite ($P_{el}$) de l'éolienne (1) et/ou la puissance réactive (Q) de l'éolienne (1).

7. Procédé selon l'une des revendications précédentes, **caractérisé en ce que** la grandeur électrique est l'angle de phase ($\varphi$) et/ou le facteur de puissance (cos $\varphi$) et/ou le courant actif ($I_P$) et/ou le courant réactif ($I_Q$).

8. Procédé selon l'une des revendications précédentes, **caractérisé en ce que** la valeur de vent ($v_W$) est la vitesse du vent ($v_W$) et/ou une section de vitesse du vent.

9. Dispositif pour la détermination d'une courbe caractéristique (9) pour une grandeur électrique ($P_{el}$, Q, $\varphi$, cos $\varphi$, $I_P$, $I_Q$) d'une éolienne (1), dans lequel la courbe caractéristique (9) contient des valeurs caractéristiques de la grandeur électrique ($P_{el}$, Q, $\varphi$, cos $\varphi$, $I_P$, $I_Q$) en fonction de différentes valeurs de vent ($v_W$), le dispositif comportant :

   - un dispositif de mesure (3) conçue pour mesurer au moins une valeur caractéristique de la grandeur électrique ($P_{el}$, Q, $\varphi$, cos $\varphi$, $I_P$, $I_Q$) pour au moins une valeur de vent ($v_W$),
   - un dispositif d'évaluation (5) conçu pour l'adaptation d'une valeur caractéristique de la grandeur électrique ($P_{el}$, Q, $\varphi$, cos $\varphi$, $I_P$, $I_Q$) attribuée à l'au moins une valeur de vent (vw), à partir d'une courbe caractéristique (7) prédéterminée contenant des valeurs caractéristiques de la grandeur électrique ($P_{el}$, Q, $\varphi$, cos $\varphi$, $I_P$, $I_Q$) en fonction des différentes valeurs de vent ($v_W$), en tenant compte de la valeur caractéristique mesurée pour l'au moins une valeur de vent (vw), **caractérisé en ce que**
   - le dispositif d'évaluation (5) est conçu pour constater le nombre (n) des valeurs caractéristiques de la grandeur électrique ($P_{el}$, Q, $\varphi$, cos $\varphi$, $I_P$, $I_Q$) mesurées pour une valeur de vent ($v_W$), et pour adapter la valeur caractéristique en fonction du nombre (n) des valeurs caractéristiques mesurées pour la valeur de vent (vw) correspondante, dans lequel
   - la valeur caractéristique de la courbe caractéristique (7) prédéterminée et l'au moins une valeur caractéristique mesurée sont intégrées de façon pondérée dans un calcul de la valeur caractéristique adaptée par le dispositif d'évaluation (5), dans la mesure où le nombre (n) des valeurs caractéristiques de la grandeur électrique ($P_{el}$, Q, φ, cos φ, $I_P$, $I_Q$) mesurées pour la valeur de vent (vw) correspondante est inférieur à un nombre limite.

10. Dispositif selon la revendication 9, **caractérisé en ce que** le dispositif d'évaluation (5) est conçu pour calculer la valeur caractéristique adaptive, en calculant une valeur moyenne à partir de la valeur caractéristique de la grandeur électrique ($P_{el}$, Q, φ, cos φ, $I_P$, $I_Q$) issue de la courbe caractéristique (7) prédéterminée et de l'au moins une valeur caractéristique mesurée, dans la mesure où le nombre (n) des valeur caractéristique de la grandeur électrique ($P_{el}$, Q, φ, cos φ, $I_P$, $I_Q$) mesurées pour la valeur de vent ($v_W$) correspondante est inférieur au nombre limite.

11. Dispositif selon l'une des revendications 9 ou 10, **caractérisé en ce que** la valeur caractéristique mesurée de la grandeur électrique ($P_{el}$, Q, φ, cos φ, $I_P$, $I_Q$) avec le poids

$$\frac{1}{n_{Ges}}$$

est intégrée dans un calcul de la valeur caractéristique adaptée, et la valeur caractéristique de la grandeur électrique ($P_{el}$, Q, φ, cos φ, $I_P$, $I_Q$) issue de la courbe caractéristique (7) prédéterminée avec le poids

$$\frac{n_{Ges} - n}{n_{Ges}}$$

est intégrée dans le calcul de la valeur caractéristique adaptée, où *n* représente le nombre des valeurs caractéristiques de la grandeur électrique ($P_{el}$, Q, φ, cos φ, $I_P$, $I_Q$) mesurées pour la valeur de vent (vw) correspondante, et $n_{Ges}$ représente un nombre auquel s'applique : $n_{Ges} \geq n$.

12. Dispositif selon la revendication 11, **caractérisé en ce que** le nombre $n_{Ges}$ est égal au nombre limite.

13. Dispositif selon l'une des revendications 9 à 12, **caractérisé en ce que** le dispositif d'évaluation (5) est conçu pour adapter la valeur caractéristique de la courbe caractéristique (7) prédéterminée pour cette valeur de vent (vw), dès lors que des valeurs caractéristiques de la grandeur électrique ($P_{el}$, Q, φ, cos φ, $I_P$, $I_Q$) mesurées pour une valeur de vent ($v_W$) atteignent un nombre limite, en déterminant la valeur moyenne des valeurs caractéristiques mesurées en tant que la valeur caractéristique adaptée pour cette valeur de vent (vw).

14. Dispositif selon l'une des revendications 9 à 13, **caractérisé en ce que** la grandeur électrique est la puissance active produite ($P_{el}$) de l'éolienne (1) et/ou la puissance réactive (Q) de l'éolienne (1).

15. Dispositif selon l'une des revendications 9 à 14, **caractérisé en ce que** la grandeur électrique est l'angle de phase (φ) et/ou le facteur de puissance (cos φ) et/ou le courant actif ($I_P$) et/ou le courant réactif ($I_Q$).

16. Dispositif selon l'une des revendications 9 à 15, **caractérisé en ce que** la valeur de vent ($v_W$) est la vitesse du vent ($v_W$) et/ou une section de vitesse du vent.

FIG.1

FIG.2

FIG.3

13

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2004104412 A1
- DE 102004051843 A1
- US 20040230377 A1